# FASCICULE DE BREVET EUROPEEN

(11) **EP 0 437 127 B1**
(45) Date de publication et mention de la délivrance du brevet: **03.04.1996**
(21) Numéro de dépôt: 90403495.6
(22) Date de dépôt: 07.12.1990
(51) Int. Cl.: G06F 11/10, G06F 7/00

(54) **Circuit décaleur avec générateur de bits de parité**
Multipositionsverschieber mit Paritätsbitgenerator
Barrel shifter with parity bit generator

(30) Priorité: 07.12.1989 FR 8916174
(43) Date de publication de la demande: 17.07.1991
(73) Titulaire: BULL S.A., F-78430 Louveciennes (FR)
(72) Inventeur: Greiner, Alain, F-75764 Paris Cédex 16 (FR)
(74) Mandataire: Colombe, Michel

(56) Documents cités:
- FR-A- 2 149 768
- US-A- 3 045 209
- US-A- 4 533 992

## Description

L'invention concerne un opérateur appelé circuit décaleur (en anglais: "barrel shifter") utilisable pour effectuer des décalages dans des unités d'arithmétique et de logique d'ordinateurs.

Plus particulièrement, l'invention concerne des circuits décaleurs du type comportant des moyens pour fournir, en fonction de signaux de sélection issus d'un circuit de décodage, un mot de sortie composé de M bits consécutifs extraits d'un mot de base de N1 bits formé par exemple à partir de deux mots d'entrée de N bits chacuns.

Les circuits décaleurs sont couramment utilisés pour effectuer des décalages à droite, à gauche ou circulaires portant sur des mots de N bits selon le mode de chargement. Les décalages à droite sont réalisés en plaçant le mot d'entrée de gauche à zéro, les décalages à gauche en plaçant le mot d'entrée de droite à zéro et les décalages circulaires avec les deux mots d'entrée identiques au mot à décaler.

D'une façon générale, les constructeurs d'ordinateurs cherchent à assurer l'intégrité de leurs systèmes en détectant et en éliminant les signaux binaires et/ou les informations de validité douteuse due à des erreurs logiques ou à un mauvais fonctionnement physique du système.

A cet effet, l'utilisation de bits de parité associés aux données est un moyen commode de détection d'erreur au niveau du traitement de celles-ci, que ce soit au cours d'opérations logiques ou de simples déplacements de données. Pour ce faire, chaque mot de donnée est généralement subdivisé en plusieurs champs ou groupes de bits et on utilise des circuits logiques "OU-exclusif" permettant de calculer le bit de parité associé à chaque groupe. Toutefois, cette opération demande un certain délai pour générer la parité à contrôler, en particulier lorsque la largeur du groupe nécessite plusieurs étages de portes "OU-exclusif" montées en cascade.

En particulier, lorsque des données sont traitées par un opérateur, tel qu'un circuit décaleur, il peut être intéressant de calculer les bits de parité associés à chaque résultat issu de l'opérateur. Le document US 3 045 209 décrit un dispositif comportant des moyens pour fournir, en fonction de signaux de sélection issus d'un circuit de décodage, un mot de sortie composé de 8 bits consécutifs extraits d'un mot de base de 16 bits, formé à partir de deux mots d'entrée de 8 bits. Le bit de parité du mot de 16 bits est utilisé pour une détection d'erreur en l'additionnant à la parité des bits restants. Le calcul du bit de parité du mot extrait est effectué selon la méthode habituelle à partir du résultat lui-même avec toutefois un retard quant au moment où le résultat est véritablement disponible pour la suite du traitement.

L'invention a pour but d'améliorer l'intégrité d'un système utilisant un circuit décaleur du type ci-dessus par la génération de bits de parité sans nuire aux performances de ce circuit. Pour ce faire, selon l'invention, le circuit décaleur comporte des moyens pour former un mot de parité composé des bits de parité de tous les groupes de n bits consécutifs qu'il est possible d'extraire du mot de base et des moyens de sélection commandés par lesdits signaux de sélection pour sélectionner les bits de parité des groupes de n bits consécutifs qui constituent le mot de sortie, n étant un diviseur de M inférieur à M, lesdits moyens de formation du mot de parité sont disposés en parallèle avec ledit circuit de décodage de sorte que le mot de parité et les signaux de sélection soient produits simultanément.

Ainsi donc le temps machine nécessaire au décodage de la valeur de décalage est utilisé pour pré-calculer les valeurs des parités de tous les groupes de bits susceptibles d'être extraits du mot de base pour les rendre prêtes à être fournies avec le mot de sortie.

Selon un premier mode de réalisation de l'invention, le circuit décaleur comporte une matrice de décalage à N1 lignes d'entrée de données et à M lignes de sortie, un circuit de décodage susceptible d'activer en fonction d'un signal de commande représentatif de la valeur de décalage à effectuer, comprise entre 0 et N1 - M, une ligne de sélection correspondante pour fournir sur les lignes de sortie le mot de sortie de données et en ce que ledit circuit décaleur comporte une pluralité de circuits de génération de parité associés aux groupes de n bits qu'il est possible d'extraire des lignes d'entrée (pour former un mot de parité de longueur N1 - n + 1 bits) et un circuit de sélection des bits de parité commandé par le circuit de décodage pour fournir sur des lignes de sortie de parité les parités des groupes de n bits du mot de sortie.

Cet agencement permet d'utiliser un circuit de décodage commun pour la matrice de décalage et les moyens de sélection des bits de parité.

Avantageusement, le circuit de sélection des bits de parité est constitué par une matrice de sélection à N1 - n + 1 lignes d'entrée de parité et à k lignes de sorties de parité (où k = M/n) commandée à partir du circuit de décodage par les lignes de sélection en fonction de ladite valeur de décalage à effectuer.

Selon un agencement particulier du circuit décaleur selon l'invention, la matrice de sélection de parité est imbriquée dans ladite matrice de décalage, avec des lignes d'entrée de parité (pi) parallèles aux lignes d'entrée de données (di) selon un arrangement de une ligne de parité (pi) associée à une (di + 2) des n lignes d'entrée de données de chaque groupe de n bits consécutifs qu'il est possible d'extraire du mot de base (par exemple pour n = 4, di, di + 1, di + 2 et di + 3), des lignes de sortie de parité (qi′) parallèles aux lignes de sortie de données (si) selon un arrangement de une ligne de sortie de parité (qi′) associée à une (s(ni′ + 2)) des lignes de sortie formant un groupe de n bits consécutifs appartenant au mot de sortie (par exemple pour n = 4, s4i′, s4i′ + 1, s4i′ + 2 et s4i′ + 3), chaque ligne de sélection (lj) commandant l'état d'une ligne de sortie (si) à partir de l'état de la ligne d'entrée de données d(i + j) et l'état d'une ligne de sortie q(i′) à partir de l'état de la ligne d'entrée de parité p(ni′ + j).

Cet agencement particulier présente un gain en surface très sensible par rapport à l'utilisation de deux matrices distinctes. A titre d'exemple, lorsque les matrices imbriquées incorporent des transistors de commutation dans une puce réalisée en technologie CMOS préchargé, l'augmentation de surface de la matrice par rapport à celle de la matrice de décalage à commutation d'un circuit décaleur simple sans génération de bits de parité est de l'ordre de 15%.

D'autres caractéristiques et avantages de la présente invention, notamment des détails de réalisation en technologie CMOS, apparaîtront plus clairement à la lecture de la description faite ci-après en référence aux dessins ci-joints dans lesquels :
- la figure 1 est une représentation schématique d'un circuit décaleur selon l'invention,
- la figure 2 est une représentation schématique d'un circuit générateur de bits de parité utilisé dans le circuit illustré à la figure 1,
- la figure 3 est un schéma opérationnel illustrant la formation du mot de parité dans le cadre de la présente invention,
- la figure 4 est une représentation schématique des matrices de selection imbriquées utilisées dans le circuit décaleur selon l'invention,
- et la figure 5 est une représentation schématique d'une cellule de commutation réalisée en technologie CMOS et utilisée dans les matrices de selection illustrées à la figure 4.

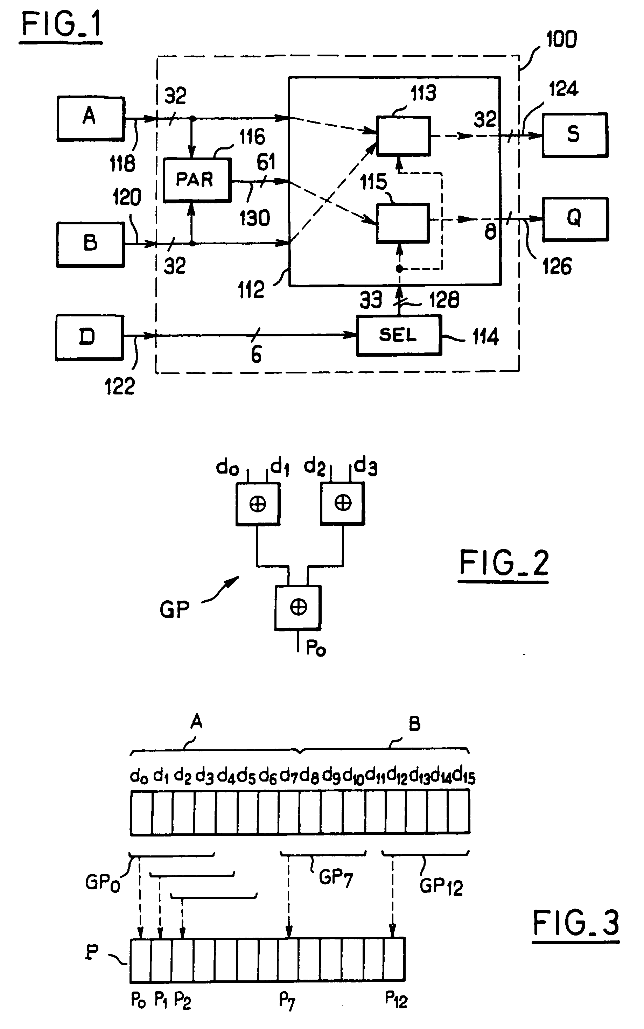

Selon le mode de réalisation de l'invention ici décrit à titre d'exemple non limitatif, le circuit décaleur 100 de la figure 1 se compose essentiellement d'une double matrice de sélection 112 (incorporant une matrice de sélection du mot décalé 113 et une matrice de sélection des parités 115), d'un circuit de décodage 114 et d'un circuit 116 générateur du mot de parité. Le circuit décaleur 100 comporte deux ensembles ou deux bus de N lignes d'entrée de données 118 et 120 (repérées de do à dN - 1) pour le bus 118 et de dN à d(2N - 1) pour le bus 120), des lignes de commande de décalage 122, un ensemble de M lignes 124 de sortie de données après décalage (repérées de sO à s(M - 1) et un ensemble de k lignes de sortie de parités (repérée de q0 à q(k - 1)).

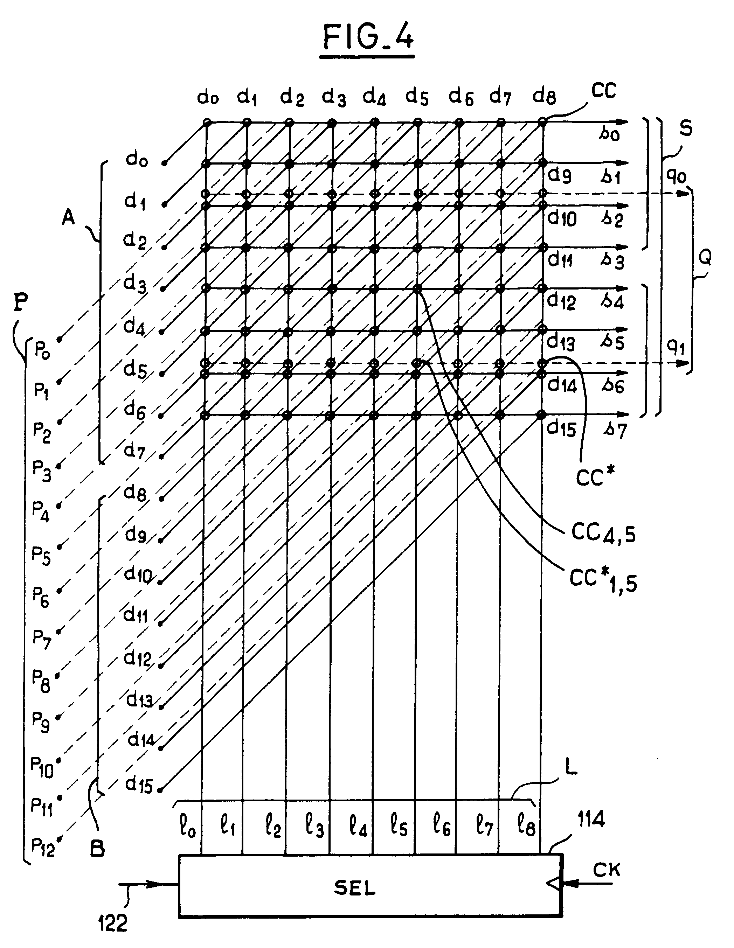

Ainsi donc, le circuit décaleur présenté est conçu pour générer les parités de k groupes (ou multiplets) de dimension n bits qui constituent après décalage le mot de sortie de dimension M bits. En application courante, la dimension M du mot de sortie est égale à celle N de chacun des mots d'entrée soit M = N, la dimension du mot de base N1 étant alors égale à 2N. A titre d'exemple non limitatif, dans la variante ici décrite du mode de réalisation de l'invention et illustrée à la figure 1, les dimensions des mots d'entrée et de sortie sont de 32 bits (M = N = 32) et la dimension n du multiplet est de 4 bits (n = 4), la sortie de parité ayant alors une dimension de 8 bits (k = 8). Toutefois l'exemple montré sur les figures 3 et 4 et donné à fin d'illustration a été choisi avec M = N = 8 bits et n = 4 bits (k = 2) pour ne pas surcharger les dessins.

Si l'on considère la figure 1, la concaténation des deux mots d'entrée de dimension N (32) donne la possibilité d'extraire par décalage un nombre L = N1 - M + 1 (33) de groupes distincts de M (32) bits consécutifs et susceptibles de former le mot de sortie, y compris le décalage nul. A cet effet, la matrice de sélection de décalage 113 est contrôlée par L lignes de sélection 128 (repérées de lo à l(N1 - M)) issues des bornes de sortie du circuit de décodage 114. Le circuit de décodage SEL 114 peut être d'un type classique, par exemple à valeur d'entrée codée binaire. Dans ce cas on a un nombre C de lignes de commande de décalage 122 tel que 2^{C}≥N1 - M + 1, ces lignes étant associées à un registre D d'entrée de la valeur de décalage.

Comme représentées sur la figure 1, les lignes d'entrée 118 et 120 sont associées à deux registres de données A et B tandis que les lignes de sorties 124 et 126 sont associées à deux registres, l'un S de sortie de données, l'autre Q de sortie de parité.

Les lignes de données 118 et 120 sont également reliées aux bornes d'entrée du circuit PAR 116 de génération du mot de parité. Le circuit PAR est constitué d'un ensemble de circuits élémentaires GP générateurs chacuns d'un bit de parité.

Chaque circuit élémentaire GP est du type à portes "OU-exclusif" (repérées ⊕) à plusieurs entrées, ce qui peut être obtenu par un montage en cascade de plusieurs "OU-exclusif" à 2 entrées, comme montré à la figure 2 qui illustre le cas particulier d'un circuit à 4 entrées destiné à la génération d'un bit de parité par quartet. On rappelle que le bit de parité (repéré pi) prendra la valeur 1 si le nombre de bits de valeur 1 du multiplet considéré est impair et prendra la valeur 0 dans le cas contraire.

La génération du mot de parité dans le circuit 116 est effectuée de la façon suivante illustrée schématiquement à la figure 3. Après concaténation dans un registre approprié des mots d'entrée A et B (dans le même ordre que celui utilisé pour le décalage), on procède à la génération de chaque bit de parité pi de tous les multiplets de bits consécutifs (ici quartets) qu'il est possible d'extraire. Le nombre de multiplets est égal à 2N-n+1 (pour N1=2N), soit à 61 dans l'exemple illustré à la figure 1 et à 13 dans l'exemple illustré aux figures 3 et 4. Cette génération des bits de parité est effectuée dans un registre P par les circuits GP (GPo à GP(2N-n)) en parallèle, de façon quasi-simultanée avec les opérations de décodage de la commande de décalage envoyée sur la ligne 122. Les signaux de parité sont fournis à N1-n+1 lignes d'entrée 130 (repérée de po à p(2N-n)) de la matrice de sélection de parité 115 avant la validation par un signal d'horloge CK du signal de sélection généré par le circuit de décodage 114.

La matrice de sélection double 112 représentée schématiquement à la figure 4 montre l'imbrication des deux matrices de décalage 113 et de parité 115. La matrice de décalage 113 présente ses lignes d'entrée (do à d7 et d8 à d15) pour les mots A et B, ses lignes de sortie S (so à s7) et ses lignes de sélection (10 à 18). La matrice de parité 115 présente ses lignes d'entrée (po à p12), ses lignes de sortie (q0 à q1) et ses lignes de sélection (10 à 18), ces dernières étant communes et de fait confondues avec celles de la matrice de décalage 113.

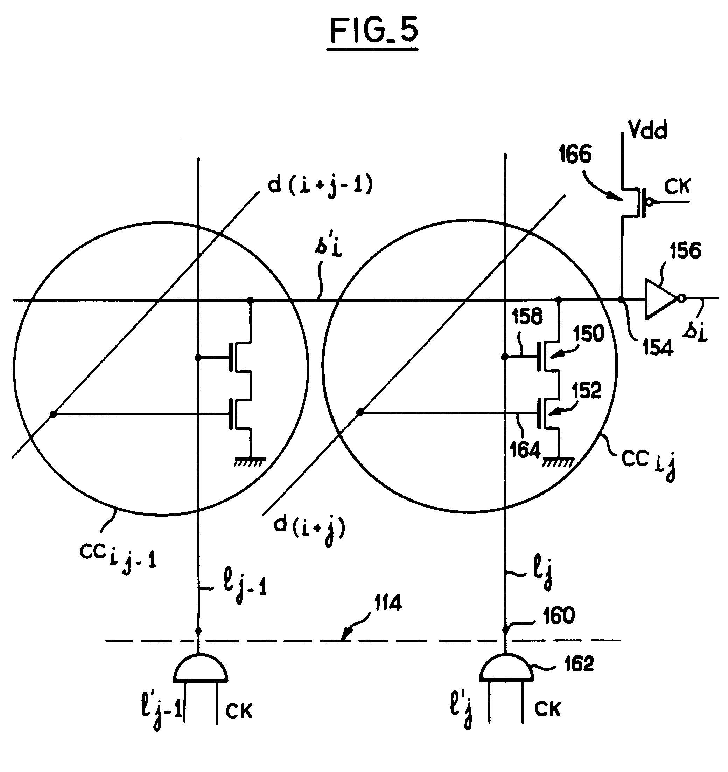

Du point de vue topologique, dans un mode de réalisation particulier en technologie CMOS, les lignes de selection L (orientées verticalement sur la figure 4) sont sur la couche métal 1, les lignes de sortie S et Q (orientées horizontalement sur la figure 4) sont sur la couche métal 2 et les lignes de données A, B et P sont agencées en escalier bi-couche pour permettre les croisements, selon une disposition générale de nappes parallèles obliques (couche métal 1 pour le cheminement vertical et couche métal 2 pour le cheminement horizontal au dessus des lignes de selection avec connexion métal inter-couche à chaque changement d'orientation). Par ailleurs, les lignes A et B sont contiguës pour assurer la concaténation des mots A et B, et les lignes P sont imbriquées dans les lignes A et B selon l'agencement représenté à la figure 4. De même, les lignes de sortie S et Q sont disposées en nappes parallèles imbriquées qui recouvrent d'une part les lignes d'entrée A, B et P et d'autre part les lignes de sélection L placées verticalement. Une ligne d'entrée, une ligne de sortie et une ligne de sélection se rejoignent par l'intermédiaire d'une cellule de commutation CC dont le schéma de principe donné à la figure 5 sera présenté ci-après.

Du point de vue fonctionnel, lorsqu'une cellule de commutation CC est validée par la ligne de sélection associée, elle reproduit sur la ligne de sortie associée la valeur logique de la ligne d'entrée associée (ligne oblique). Lorsqu'elle n'est pas validée, la cellule CC est maintenue à l'état de haute impédance.

L'agencement topologique particulier de la figure 4 (lignes de sortie S et de sélection L perpendiculaires, lignes d'entrée en escalier obliques avec de préférence un angle à 45°) présente l'avantage d'optimiser la surface occupée. Ainsi donc la matrice de décalage 113 présente M lignes et 2N-M+1 colonnes (soit, sur la figure 4 une matrice 8x9) et la matrice de parité 115 présente k lignes et 2N-M+1 colonnes (soit sur la figure 4 une matrice 2x9). Cette topologie est utilisée dans la réalisation pratique de la matrice de sélection double 112 sous forme de micro-circuit LSI en technologie CMOS.

D'une façon plus précise, les lignes d'entrée de parité (pi) présentent un agencement en escalier parallèle à celui des lignes d'entrée de données (di) selon un arrangement de une ligne de parité (pi) associée à une ligne (dans le cas particulier illustré à la figure 4, la ligne (di+2) par exemple) des n=4 lignes d'entrée de données de chaque groupe de n bits consécutifs qu'il est possible d'extraire du mot de base (di, di+1, di+2 et di+3).
De même, les lignes de sortie de parité (qi') sont parallèles aux lignes de sortie (si) selon un arrangement de une ligne de sortie de parité (qi') associée à une ligne (dans le cas particulier illustré à la figure 4 où (pi) est associé avec (di+2), la ligne (s(ni'+2)) pour respecter la correspondance entre parité et groupe de bits consécutifs) des n=4 lignes de sortie (sni', sni'+1, sni'+2, sni'+3) formant un groupe de n bits consécutifs appartenant au mot de sortie. Ainsi les lignes de sortie de parité (qi') sont régulièrement espacées toutes les n lignes de sortie (si).
Enfin, chaque ligne de sélection (lj) commande, par l'intermédiaire de la cellule de commutation CCij, l'état de la ligne de sortie (si) à partir de la ligne d'entrée de données d(i+j) et par l'intermédiaire de la cellule de commutation CC*i'j, l'état de la ligne de sortie (qi') à partir de la ligne d'entrée de parité p(ni'+j).

La figure 5 représente une cellule de commutation CCij associée à la ligne d'entrée d(i + j), à la ligne de sortie (si) et à la ligne de sélection (lj). Cette réalisation utilise la technologie dite "CMOS préchargée" où chaque ligne horizontale (par rapport à la figure 5) de la matrice correspond à une ligne (s′i) qui est préchargée à une tension positive Vdd pendant la phase dite de précharge du signal d'horloge (signal CK = 0 pendant la phase de précharge). Pendant la phase dite d'évaluation du signal d'horloge CK (signal CK = 1 pendant la phase d'évaluation), cette ligne (s′i) prend un état logique complémentaire à la valeur de sortie (si). Pour ce faire, chaque ligne préchargée (s′i) est reliée à l'entrée 154 d'un inverseur 156, dont la sortie correspond à la ligne de sortie (si). Chaque cellule de commutation CC est principalement constituée de deux transistors NMOS 150 et 152 montés en série. Le drain du transistor 150 est connecté à la ligne préchargée (s′i) directement sur l'entrée 154 de l'inverseur 156, tandis que la source du transistor 152 est connectée à la masse (potentiel de niveau bas) du circuit. La grille 158 du transistor 150 est connectée à la ligne de sélection (lj), plus exactement à la sortie 160 d'une porte ET de validation 162 incorporée dans le circuit de décodage 114. La porte ET 162 reçoit en entrée le signal (l′j) correspondant généré dans le circuit de décodage 114 et le signal d'horloge CK (la validation étant effectuée pendant la phase d'évaluation où CK = 1). La grille 164 du transistor 152 est connectée à la ligne d'entrée de données d(i + j), (par exemple pour un décalage de 5 unités, soit j = 5, la valeur du bit 4 du mot de sortie, soit s4, sera égale à celle du bit de données d9).

Par ailleurs, un transistor PMOS de précharge 166 est connecté par sa source à une source de tension Vdd et par son drain à la ligne (s′i). Ce transistor PMOS 166 reçoit sur sa grille 168 le signal d'horloge CK.

Dans le cas où la cellule de commutation CC* appartient à la matrice de parité 115, son schéma électrique de base reste inchangé. Toutefois, la ligne de sélection (lj) est associée à une ligne de sortie (qi'), au travers d'une ligne préchargée (q'i'), et à une ligne de données de parité p(ni'+j), (par exemple pour un décalage de 5 unités (j=5), la valeur de la parité du quartet 1 (n=4, i'=1) du mot de sortie sera celle du bit de parité de la ligne p9).

Les cellules de commutation fonctionnent de la façon suivante : à chaque cycle de l'horloge (non représentée) du circuit décaleur, le signal CK prend successivement une valeur basse (CK=0 pendant la phase de précharge) puis une valeur haute (CK=1 pendant la phase d'évaluation). Pendant la phase dite de précharge à CK=0, le transistor PMOS 166 est rendu passant et l'entrée de l'inverseur 156 est portée au potentiel Vdd. Par ailleurs, la sortie 160 de la porte ET 162 est portée à un niveau bas pendant toute cette phase de précharge. Il en résulte un blocage du transistor NMOS 150. Pendant la phase dite d'évaluation où CK=1, le transistor PMOS 166 est à nouveau bloqué tandis que le signal CK=1 est envoyé à l'entrée de toutes les portes ET contrôlant les lignes de sélection en sortie du circuit de décodage 114. Selon la valeur de décalage transmise par la ligne de commande 122, une seule ligne de pré-sélection, par exemple (l′j), sera activée et portée à une valeur haute (l'j=1). Ainsi donc la sortie 160 de la porte ET correspondante 162 et toute la ligne de sélection correspondante (lj) associée à la colonne (j) des matrices de décalage et de parité commandant les grilles 158 des transistors NMOS 150 est portée à un potentiel haut, ce qui aura pour effet de rendre passant ces mêmes transistors 150 permettant ainsi la lecture de la valeur des signaux d(i+j) et p(ni'+j).

Dans le cas où d(i + j) = 0, la grille 164 du transistor 152 reste à un niveau de tension bas maintenant ce dernier en état bloqué. La ligne (s′i) reste à un niveau haut ce qui donne à la sortie de l'inverseur 156 un signal de sortie au niveau bas (si = 0). A l'inverse, dans le cas où d(i + j) = 1, la grille 164 est portée à un niveau haut ce qui rend passant le transistor 152. Le blocage du transistor 166 et la mise en état passant des deux transistors 150 et 152 fait chuter la tension de la ligne (s′i) qui passe au niveau bas. La sortie de l'inverseur 156 bascule alors au niveau haut (si = 1).

Ainsi donc, au cours de cette phase d'évaluation, toutes les lignes de sorties (si) et (qi′) activées par la même ligne de sélection (lj) seront représentatives de valeurs binaires présentes sur les lignes de données et de parité associées. Il est à remarquer que le temps nécessaire au décodage de la valeur de décalage par le circuit SEL 114 et le temps nécessaire à la génération du mot de parité par le circuit PAR 116 sont du même ordre; ceci permet d'assurer le synchronisme au niveau de la disponibilité des mots de sortie et des parités des groupes de bits constitutifs de ces mots. En effet toutes les opérations de décalage et de génération des bits de parité des multiplets constitutifs du mot de sortie sont effectuées au cours d'un même cycle d'horloge.

Par ailleurs, l'imbrication des matrices de décalage et de parité permet un gain de place appréciable lors de l'intégration des composants dans une puce. En pratique, la limite physique est imposée par la distance minimale à respecter entre deux lignes parallèles d'interconnexion des transistors au niveau d'une des couches de métallisation de la puce (dans le cas particulier décrit au niveau de la couche métal 1, le positionnement des lignes de la couche métal 2 étant prédeterminé). Par rapport à une puce basée sur une seule matrice de décalage pour deux mots d'entrée de 32 bits et un mot de sortie de 32 bits également (2 × 32 entrées, 32 sorties et 33 sélections), une puce selon l'invention avec génération des bits de parité de chaque quartet du mot de sortie (comportant en plus 61 entrées de parité et 8 sorties de parité) présente une augmentation de la surface active de la matrice de l'ordre de 15 %. Toutefois, sans sortir du cadre de l'invention, un autre mode de réalisation de celle-ci (non représenté) présente les deux matrices de commutation de décalage et de parité physiquement distinctes structurées chacune autour d'une puce (ou d'un micro-circuit) spécifique.

## Revendications

1. Circuit décaleur du type comportant des moyens (113) pour fournir, en fonction de signaux de sélection issus d'un circuit de décodage (114), un mot de sortie composé de M bits consécutifs extraits d'un mot de base de N1 bits, formé par exemple à partir de deux mots d'entrée de N bits chacuns, des moyens (116) pour former un mot de parité composé des bits de parité de tous les groupes de n bits consécutifs qu'il est possible d'extraire du mot de base et des moyens de sélection (115) commandés par lesdits signaux de sélection pour sélectionner les bits de parité des groupes de n bits consécutifs qui constituent le mot de sortie, n étant un diviseur de M, inférieur à M, caractérisé en ce que lesdits moyens (116) de formation du mot de parité sont disposés en parallèle avec ledit circuit de décodage (114) de sorte que le mot de parité et les signaux de sélection soient produits simultanément.

2. Circuit décaleur selon la revendication précédente, caractérisé en ce qu'il comporte une matrice de décalage (113) à N1 lignes d'entrée de données (118, 120) et à M lignes de sortie (124), un circuit de décodage (114) susceptible d'activer en fonction d'un signal de commande représentatif de la valeur de décalage à effectuer, comprise entre 0 et N1-M, une ligne de sélection (128) correspondante pour fournir sur les lignes de sortie le mot de sortie de données et en ce que ledit circuit décaleur comporte une pluralité (116) de circuits de génération de parité associés aux groupes de n bits qu'il est possible d'extraire des lignes d'entrée (118, 120) (pour former un mot de parité de longueur N1-n+1 bits) et un circuit de sélection (115) des bits de parité commandé par le circuit de décodage pour fournir sur des lignes de sortie de parité (126) les parités des groupes de n bits du mot de sortie.

3. Circuit décaleur selon la revendication 2, caractérisé en ce que le circuit de sélection (115) des bits de parité est constitué par une matrice de sélection à N1-n+1 lignes d'entrée de parité (130) et à k lignes de sortie de parité (126) (où M=kn), et commandée à partir du circuit de décodage (114) par les lignes de sélection (lj) en fonction de ladite valeur de décalage à effectuer.

4. Circuit décaleur selon la revendication 3, caractérisé en ce que la matrice de sélection de parité (115) est imbriquée dans ladite matrice de décalage (113), avec des lignes d'entrée de parité (pi) parallèles aux lignes d'entrée de données (di) selon un arrangement de une ligne de parité (pi) associée à une (di+2 par exemple) des n lignes d'entrée de données de chaque groupe de n bits consécutifs qu'il est possible d'extraire du mot de base (par exemple pour n=4, di, di +1, di +2 et di +3), des lignes de sorties de parité (qi') parallèles aux lignes de sortie de données (si) selon un arrangement de une ligne de sortie de parité (qi') associé à une (la ligne s(ni'+2)) des lignes de sortie formant un groupe de n bits consécutifs appartenant au mot de sortie (par exemple pour n=4, s4i', s4i'+1, s4i'+2 et s4i'+3), chaque ligne de sélection (lj) commandant l'état d'une ligne de sortie (si) à partir de l'état de la ligne d'entrée de données d(i+j) et l'état d'une ligne de sortie (qi') à partir de l'état de la ligne d'entrée de parité p(ni'+j).

5. Circuit décaleur selon la revendication 4, caractérisé en ce que chaque ligne de sortie (si) ou (qi') regroupe un ensemble de L=N1-M+1 cellules de commutation CC ou CC* montées en série sur une ligne (s'i) ou (q'i') préchargée par un circuit de précharge (166), par exemple un montage série de deux transistors NMOS (150, 152) respectivement commandés par une ligne d'entrée associée d(i+j) ou p(ni'+j) et une ligne de sélection associée (lj).

6. Circuit décaleur selon l'une des revendications précédentes, caractérisé en ce que le mot de base est formé de deux mots d'entrée de dimension N chacun, en ce que les mots d'entrée et de sortie sont de même dimension 32 et en ce que la dimension n des groupes du mot de sortie dont on génère les parités est égale à 4.

## Patentansprüche

1. Verschiebungsschaltung des Typs, der versehen ist mit Mitteln (113), die in Abhängigkeit von von einer Decodierungsschaltung (114) ausgegebenen Wählsignalen ein Ausgangswort liefern, das aus M aufeinanderfolgenden Bits zusammengesetzt ist, die aus einem Basiswort aus N1 Bits entnommen sind, das beispielsweise anhand zweier Eingangswörter mit jeweils N Bits gebildet ist, Mitteln (116), die ein Paritätswort bilden, das aus den Paritätsbits sämtlicher Gruppen von n aufeinanderfolgenden Bits zusammengesetzt ist, die aus dem Basiswort entnommen werden können, und Wählmitteln (115), die durch die Wählsignale gesteuert werden, um die Paritätsbits der Gruppen von n aufeinanderfolgenden Bits auszuwählen, die das Ausgangswort bilden, wobei n ein Teiler von M kleiner als M ist, dadurch gekennzeichnet, daß die Mittel (116) für die Bildung des Paritätsworts zur Decodierungsschaltung (114) parallelgeschaltet sind, so daß das Paritätswort und die Wählsignale gleichzeitig erzeugt werden.

2. Verschiebungsschaltung nach dem vorangehenden Anspruch , dadurch gekennzeichnet, daß sie eine Verschiebungsmatrix (113) mit N1 Dateneingangsleitungen (118, 120) und M Ausgangsleitungen (124) und eine Decodierungsschaltung (114), die in Abhängigkeit von einem Steuersignal, das den Wert der auszuführenden Verschiebung repräsentiert, der zwischen 0 und N1-M liegt, eine entsprechende Wählleitung (128) aktivieren kann, um auf die Ausgangsleitungen das Datenausgangswort zu liefern, und daß die Verschiebungsschaltung mehrere (116) Paritätserzeugungsschaltungen, die zu den Gruppen von n Bits gehören, welche aus den Eingangsleitungen (118, 120) entnommen werden können (um ein Paritätswort mit einer Länge von N1-n+1 Bits zu bilden), sowie eine Wählschaltung (115) für Paritätsbits enthält, die von der Decodierungsschaltung gesteuert wird, um auf den Paritätsausgangsleitungen (126) die Paritäten der Gruppen von n Bits des Ausgangsworts zu liefern.

3. Verschiebungsschaltung nach Anspruch 2, dadurch gekennzeichnet, daß die Wählschaltung (115) für Paritätsbits durch eine Wählmatrix mit N1-n+1 Paritätseingangsleitungen (130) und k Paritätsausgangsleitungen (126) (wobei M = kn) gebildet ist und ausgehend von der Decodierungsschaltung (114) durch die Wählleitungen (lj) in Abhängigkeit vom Wert der auszuführenden Verschiebung gesteuert wird.

4. Verschiebungsschaltung nach Anspruch 3, dadurch gekennzeichnet, daß die Paritätswählmatrix (115) mit der Verschiebungsmatrix (113) verschachtelt ist, mit Paritätseingangsleitungen (pi), die zu den Dateneingangsleitungen (di) gemäß einer Anordnung parallel sind, in der eine Paritätsleitung (pi) zu einer (z. B. di+2) von n Dateneingangsleitungen jeder Gruppe aus n aufeinanderfolgenden Bits, die aus dem Basiswort entnommen werden können, gehört (z. B. für n=4, di, di+1, di+2 und di+3), und mit Paritätsausgangsleitungen (qi'), die zu den Datenausgangsleitungen (si) gemäß einer Anordnung parallel sind, in der eine Paritätsausgangsleitung (qi') zu einer (der Leitung s(ni'+2)) der Ausgangsleitungen gehört, die eine Gruppe n von aufeinanderfolgenden Bits bilden, die zum Ausgangswort gehören (z. B. für n = 4, s4i', s4i'+1, s4i'+2 und s4i'+3), wobei jede Wählleitung (lj) den Zustand einer Ausgangsleitung (si) ausgehend vom Zustand der Dateneingangsleitung d(i+j) und den Zustand einer Ausgangsleitung (qi') ausgehend vom Zustand der Paritätseingangsleitung p(ni'+j) steuert.

5. Verschiebungsschaltung nach Anspruch 4, dadurch gekennzeichnet, daß jede Ausgangsleitung (si) oder (qi') eine Gruppe von L=N1-M+1 Kommutatorzellen CC oder CC* umgruppiert, die in Serie in einer Leitung (s'i) oder (q'i') angeordnet sind, die durch eine Vorladungsschaltung (166) vorgeladen ist, beispielsweise eine Serienschaltung aus zwei NMOS-Transistoren (150, 152), die durch eine zugehörige Eingangsleitung d(i+j) oder p(ni'+j) bzw. eine zugehörige Wählleitung (lj) gesteuert werden.

6. Verschiebungsschaltung nach einem der vorangehenden Ansprüche, dadurch gekennzeichnet, daß das Basiswort aus zwei Eingangswörtern mit der jeweiligen Dimension N gebildet ist, daß die Eingangs- und Ausgangswörter die gleiche Dimension 32 besitzen und daß die Dimension n der Gruppen des Ausgangsworts, für die die Paritäten erzeugt werden, gleich 4 ist.

## Claims

1. A barrel shifter circuit of the type comprising means (113) for supplying, as a function of selection signals coming from a decoding circuit (114), an output word composed of M consecutive bits extracted from a basic word of N1 bits, formed for example from two input words of N bits each, means (116) for forming a parity word composed of the parity bits of all the groups of n consecutive bits that it is possible to extract from the basic word and selection means (115) controlled by said selection signals for selecting the parity bits of the groups of n consecutive bits that constitute the output word, n being a divisor of M, less than M, characterised in that said means (116) for forming the parity word are arranged parallel to said decoding circuit (114) such that the parity word and the selection signals are produced simultaneously.

2. A barrel shifter circuit according to the preceding claim, characterised in that it comprises a shift matrix (113) with N1 data input lines (118, 120) and with M output lines (124), a decoding circuit (114) able to activate, as a function of a control signal representing the shift value to be effected, comprised between 0 and N1 - M, a corresponding selection line (128) so as to supply, on the output lines, the data output word and in that said barrel shifter circuit comprises a plurality (116) of parity generation circuits associated with the groups of n bits that can be extracted from the input lines (118, 120) (to form a parity word N1 - n + 1 bits long) and a circuit (115) for selecting the parity bits, controlled by the decoding circuit to supply, on the parity output lines (126), the parities of the groups of n bits of the output word.

3. A barrel shifter circuit according to Claim 2, characterised in that the circuit (115) for selecting the parity bits is constituted by a selection matrix with N1-n + 1 parity input lines (130) and with k parity output lines (126) (where M = kn), and controlled from the decoding circuit (114) by the selection lines (lj) as a function of said shift value to be effected.

4. A barrel shifter circuit according to Claim 3, characterised in that the parity selection matrix (115) is embedded in said shift matrix (113), with parity input lines (pi) parallel to the data input lines (di) according to an arrangement of one parity line (pi) associated with one (di + 2 for example) of the n data input lines of each group of n consecutive bits that it is possible to extract from the basic word (for example, for n = 4, di, di + 1, di + 2 and di + 3), parity output lines (qi') parallel to the data output lines (si) according to an arrangement of one parity output line (qi') associated with one (the line s(ni' + 2)) of the output lines forming a group of n consecutive bits belonging to the output word (for example, for n = 4, s4i', s4i' + 1, s4i' + 2, s4i' + 3), each selection line (ij) controlling the state of an output line (si) starting from the state of the data input line d(i + j) and the state of an output line (qi') starting from the state of the parity input line p(ni' + j).

5. A barrel shifter circuit according to Claim 4, characterised in that each output line (si) or (qi') contains a set of L = N1 - M + 1 switching cells CC or CC* connected in series on a line (s'i) or (q'i') preloaded by a preloading circuit (166), for example a serial connection of two NMOS transistors (150, 152) controlled respectively by an associated input line (d(i + j) or p(ni' + j) and an associated selection line (lj).

6. A barrel shifter circuit according to one of the preceding claims, characterised in that the basic word is formed of two input words each of the dimension N, in that the input and output words are of the same dimension 32 and in that the dimension n of the groups of the output word, the parities of which are being generated, is equal to 4.
